# EUROPEAN PATENT APPLICATION

(11) **EP 4 768 230 A1**
(43) Date of publication of application: **01.07.2026**
(21) Application number: 25205017.4
(22) Date of filing: 26.09.2025
(51) Int. Cl.: B29C 65/20, E06B 3/96, B29K 27/06

(54) **SEAMLESS OR NEAR SEAMLESS WELDING FOR PVC AND COMPOSITE WINDOW PROFILES**

(30) Priority: 27.09.2024 US 202463700241 P
(71) Applicant: Joseph Machine Company Inc., Dillsburg Pennsylvania 17019 (US)
(72) Inventor: VAJDIC, Tom, Harrisburg, Pennsylvania 17112 (US); GOOD, Bradley, Camp Hill, Pennsylvania 17011 (US); LUKIC, Milijan, New Cumberland, Pennsylvania 17070 (US); PIGLIACAMPO, Anthony, Boulder, Colorado 80302 (US); DUNMIRE, Andrew Calvin, Wellsville, Pennsylvania 17365 (US)
(74) Representative: Wynne-Jones IP Limited

(57) **Abstract**

A weld fixture (100) for joining polymer containing workpieces (300). The weld fixture (100) includes a fixture support member (101) and a moveable seal member (103) mounted on the fixture support member (101). The seal member (103) has a workpiece contacting surface (105) configured to engage a first workpiece (300) and a seal member contacting surface (107) configured to engage a corresponding seal member (103). The engagement of the workpiece contacting surface (105) with the first workpiece (300) and the engagement of the seal member contacting surface (107) with the corresponding seal member (103) form an edge seal (109) for directing melted polymeric material away from the edge seal (109) during joining to form a finished seam surface (703). In one embodiment, the apparatus includes a window component welding apparatus. Welding apparatuses and methods for joining workpieces for polymer containing workpieces for forming joined products having a finished seam surface are also disclosed.

## Description

### RELATED APPLICATIONS

This application claims priority to U.S. Provisional Patent Application 63/700,241, filed September 27, 2025, entitled, "SEAMLESS OR NEAR SEAMLESS WELDING FOR PVC AND COMPOSITE WINDOW PROFILES", which is incorporated by reference herein in its entirety.

### FIELD OF THE INVENTION

The present disclosure is generally directed to joining polymeric components, joined polymeric components and apparatuses for forming joined polymeric components.

### BACKGROUND OF THE INVENTION

In known welding processes for polymer containing products, when the heated polyvinyl chloride (PVC) components are brought together, weld spew is able to freely flow during heating, deforming the end of the profile. When the profiles are pushed together for welding, the material fuse together. The weld spew that is above the visual surface is undesirable and is typically removed using a cutting or machining process.

Another known welding technique exists to improve the look of the seam, which involves scraping off or cutting off of the upper spew after the initial heating step. In addition, there are known processes that mechanically form a step like feature into the edge of the profile so that not all of the surface gets melted during heating. Known methodologies suffer from the drawback that they require additional processing steps and/or additional equipment which provides increased undesirable complexity to the machine. In addition, known techniques fail to provide satisfactory as-formed seam surfaces. Further known systems fail to provide modularity, and do not allow detachment of working components, making these known systems difficult to adjust, for example, for different component geometries or product lines.

What is needed is a welding method and apparatus that provides a seamless or near-seamless weld in polymer containing products that does not suffer from the drawbacks of the prior art. Other features and advantages will be made apparent from the present specification. The teachings disclosed extend to those embodiments that fall within the scope of the claims, regardless of whether they accomplish one or more of the aforementioned needs.

### SUMMARY OF THE INVENTION

In particular, the disclosure is generally directed to welding apparatuses, methods for joining workpieces and weld fixtures for polymer containing workpieces form finished and aesthetically pleasing joined products having a finished seam surface.

An embodiment of the present disclosure includes a weld fixture for joining polymer containing workpieces. The weld fixture includes a fixture support member and a moveable seal member mounted on the fixture support member. The seal member has a workpiece contacting surface configured to engage a first workpiece and a seal member contacting surface configured to engage a corresponding seal member. The engagement of the workpiece contacting surface with the first workpiece and the engagement of the seal member contacting surface with the corresponding seal member form an edge seal for directing melted polymeric material away from the edge seal during joining to form a finished seam surface. In one embodiment, the apparatus includes a window component welding apparatus.

Another embodiment of the present disclosure includes an apparatus for joining polymer containing workpieces. The apparatus includes a first weld fixture and a second weld fixture. The first weld fixture and the second weld fixture each include structures according to embodiments of the present disclosure. The first weld fixture is configured to receive a first workpiece and the second weld fixture being configured to receive a second workpiece. The apparatus further includes a heating device for heating an end profile of each of the first workpiece and the second workpiece. The heating device is moveable to a position to heat the end profile of each of the first workpiece and the second workpiece. An edge seal is formed by the engagement of a seal member of the first weld fixture with a seal member of the second weld fixture. In one embodiment, the apparatus includes a window component welding apparatus.

Another embodiment of the present disclosure includes a method for forming a seamless or near seamless weld on joined polymer containing workpieces. The method includes positioning a first workpiece having a first end profile on a first weld fixture having a first seal member. The first workpiece is engaged with a workpiece contacting surface of the first seal member. A second workpiece having a second end profile is positioned on a second weld fixture having a second seal member. The second end profile corresponds to the first end profile and the second workpiece is engaged with a workpiece contacting surface of the second seal member. The first and second end profiles are heated to at least partially melt the material of the first and second end profiles. The first and second workpieces and the first and second weld fixtures are directed together to form an edge seal and join the first workpiece to the second workpiece at the first end profile and the second end profile. The engagement of the first seal member and the second seal member form an edge seal for directing material away from the edge seal when the first seal member and the second seal member are engaged to form a finished seam surface. In one embodiment, the method includes joining components of a window component.

Another embodiment of the present disclosure includes joined product including a first workpiece joined to the second. The product further includes a seam having a finished seam surface and a seam surface a distal surface of the product including polymeric spew directed from the edge seal. In one embodiment, the joined product is a window component.

Other features and advantages of the present invention will be apparent from the following more detailed description of the preferred embodiment, taken in conjunction with the accompanying drawings which illustrate, by way of example, the principles of the invention.

### BRIEF DESCRIPTION OF DRAWINGS

FIG. 1 shows a schematic view of a weld fixture according to an embodiment of the present disclosure.
FIG. 2 shows a schematic side view of the weld fixture of FIG. 1.
FIG. 3 shows a workpiece being positioned onto a set of weld fixtures according to an embodiment of the present disclosure.
FIG. 4 shows a schematic view of a welding apparatus for joining two workpieces according to an embodiment of the present disclosure.
FIG. 5 shows a schematic view of the welding apparatus of FIG. 4 wherein the workpieces are heated with the heating device according to an embodiment of the present disclosure.
FIG. 6 shows a schematic view of the welding apparatus of FIG. 4 wherein the heating device has been removed and the heated workpieces are directed together to form a joined product according to an embodiment of the present disclosure.
FIG. 7 shows a schematic view of the formed joined product according to an embodiment of the present disclosure.
FIG. 8 shows a weld fixture in engagement with a workpiece according to an embodiment of the present disclosure.
FIG. 9 shows a side view of the weld fixture of FIG. 8.
FIG. 10 shows the weld fixture of FIG. 8 illustrating internal components of the weld fixture according to an embodiment of the present disclosure.
FIG. 11 shows a weld fixture in engagement with a workpiece according to another embodiment of the present disclosure.
FIG. 12 shows a welding apparatus according to the present disclosure showing workpieces prior to engagement with the weld fixtures.
FIG. 13 shows a welding apparatus with workpieces engaged with the weld fixtures and aligned using an alignment plate according to an embodiment of the present disclosure.
FIG. 14 shows a welding apparatus wherein the workpieces are heated with a heating device according to another embodiment of the present disclosure.
FIG. 15 shows a top view of the welding apparatus of FIG. 14 with the heating device in contact with seal members.
FIG. 16 shows the welding apparatus of FIG. 14 wherein the heating device is removed according to another embodiment of the present disclosure.
FIG. 17 shows the welding apparatus of FIG. 14 wherein the heated workpieces are directed into contact to form the joined product according to another embodiment of the present disclosure.
FIG. 18 shows a welding apparatus according to another embodiment of the present disclosure, wherein the heated workpieces have been directed into contact to form the joined product.
FIG. 19 shows a welding apparatus of FIG. 18, wherein the joined product has been released from the weld fixtures.
FIG. 20 shows a top view of the formed joined product according to another embodiment of the present disclosure.

Wherever possible, the same reference numbers will be used throughout the drawings to represent the same parts.

### DETAILED DESCRIPTION OF THE INVENTION

Embodiments according to the present disclosure significantly improves the aesthetic quality of the weld joint on polymer containing workpieces, such as vinyl and composite windows and doors. The weld fixture and method according to the present disclosure reduces or eliminates the need for a secondary cleaning and/or removal operations. These weld fixtures and methods improve aesthetics, quality and the cycle time required to manufacture joined products, such as windows or doors. The folded over welding joint does not require cleaning on the aesthetic surfaces. Further, weld fixtures according to the present disclosure are able to have specific end shaping which allows for the molding of the fused weld joint. In addition, the quality of the weld line is better than observed by other known attempts at forming seamless welds. The weld fixture and apparatus prevent that visible spew from forming with the weld fixtures forcing spew inward leaving a seamless or near seamless joints. Seal members are integrated into the weld fixtures in a manner that allows them to be used on a standard welding machine and can be used in multi stack configuration or quick changed out to put in standard fixtures to the machine can operate with a normal welding cycle, permitting easy setup and retrofitting of existing welding machines.

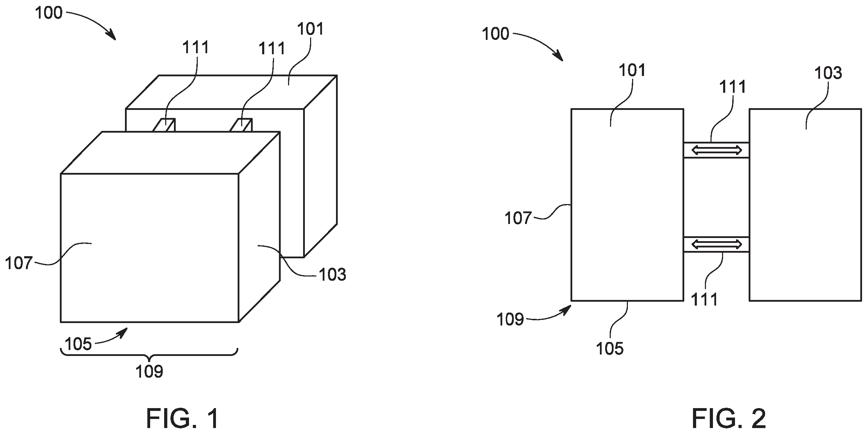

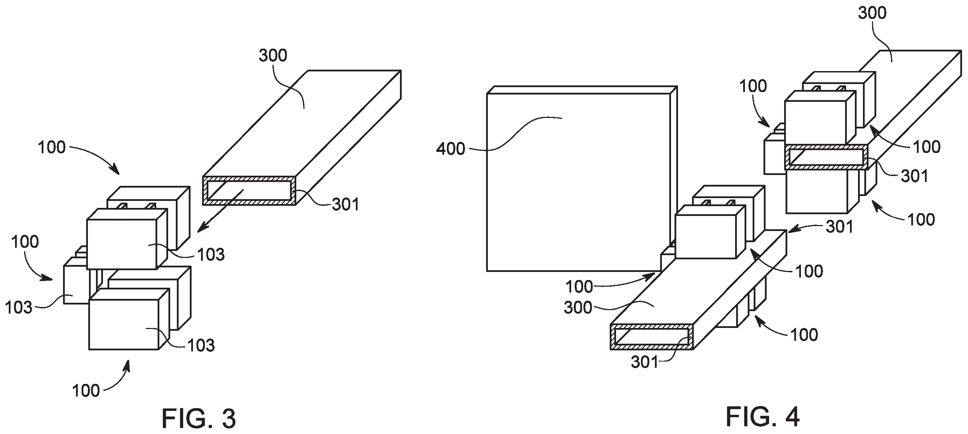

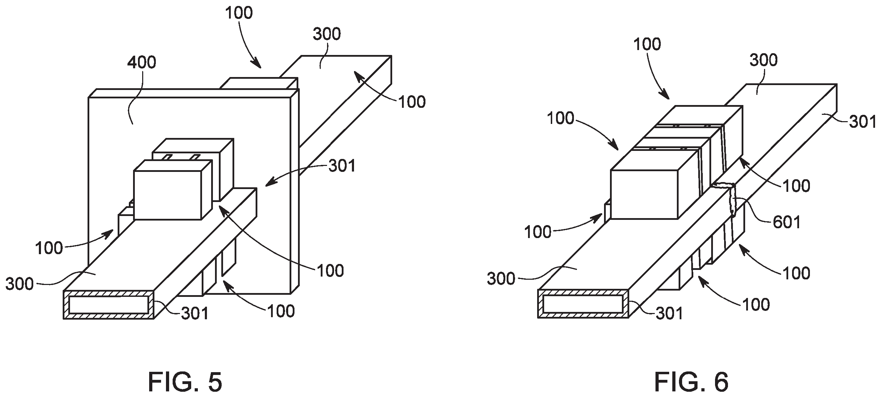

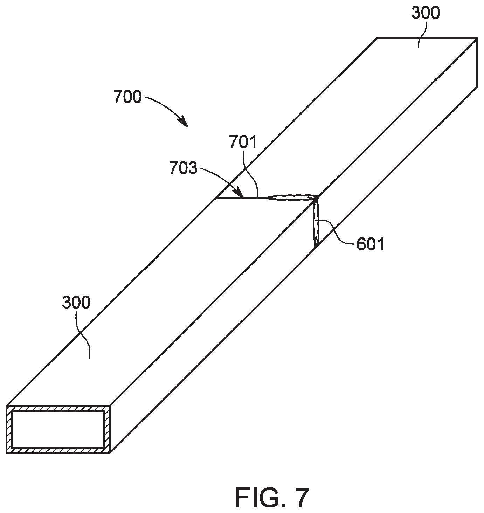

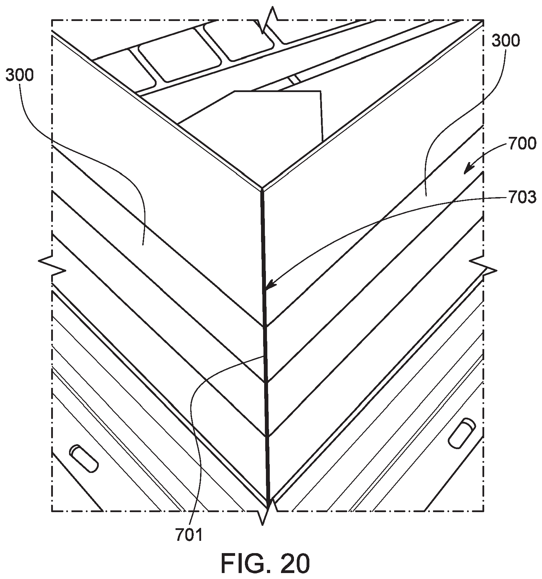

FIG 1 shows a weld fixture 100 for joining polymer containing workpieces 300. Weld fixture 100 includes a fixture support member 101 and a moveable seal member 103 mounted on the fixture support member 101. In one embodiment, the fixture support member 101 is configured to engage the workpiece 300 to retain and position the workpiece 300. Seal member 103 includes a workpiece 300 contacting surface 105 configured to engage a first workpiece 300 (see for example, FIG. 4) and a seal member 103 contacting surface 107 configured to engage a corresponding seal member 103. In one embodiment, the workpiece 300 contacting surface 105 corresponds to at least a portion of an end profile geometry. The engagement of the workpiece 300 contacting surface 105 with workpiece 300 and the engagement of the seal member 103 contacting surface 107 with the corresponding seal member 103 form an edge seal 109 for directing melted polymeric material away from the edge seal 109 during joining to form a finished seam surface 703. Engaged, engagement, engage and grammatical variations thereof, as utilized herein, means any contact, connection or interaction between components that results in a retention or combined function. Melt, melted and grammatical variations thereof, as utilized herein, means a heating or heated component that has been softened or at least partially liquified, sufficient to deform or flow and allow interaction, welding and/or fusing of the heated components. The melted material directed away from the edge seal 109 may exit a portion of the seam formed that does not have an edge seal 109 present. The edge seal 109 forms a finished seam surface 703 (see for example FIGs. 7 and 20). Although FIGs. 1 and 2 show the edge seal 109 as a corner of the seal member 103, it is understood that the edge seal 109 is formed at the interface, shown in FIGs. 1 and 2, when the seal member 103 are engaged. Seal member 103 is moveable with respect to the fixture support member 101. For example, seal member 103 may be slidably mounted on fixture support member 101. In embodiments according to the present disclosure, the seal members 103 are movably attached to the fixture support member 101 only, where the seal member is not affixed to any other component of the apparatus. In addition, force-providing members 111 are provided to provide a force on the seal member 103. The active pressure of the force-providing members 111 may be provided by any mechanical means including but not limited to cams, springs, pneumatics, hydraulics or servo actuation. The components providing the force may be contained in the fixture support member 101. In one embodiment, the force providing members 111 are springs that urge the seal members 103 away from the fixture support member 101. For example, when multiple weld fixtures 100 are utilized to join two or more workpieces 300 (see for example FIGs. 3-6), a seal member 103 on a first weld fixture 100 may be configured to mate a seal member 103 of a second weld fixture 100. The force-providing member 111 provides to force that maintains the engagement of the seal members 103 and forms the edge seal 109 (see also FIGs.6 and 7).

FIGs. 3-6 illustrate a method for forming a seamless or near seamless weld on joined polymer containing workpieces 300 according to the present disclosure. FIG. 3 shows a step where a first workpiece 300 is brought into contact with a second workpiece 300. The workpiece 300 may contain any suitable polymer or composite material capable of being heated and joined. In one embodiment, the workpiece 300 may contain polyvinyl chloride (PVC), PVC containing material or composite. Each of workpiece 300 includes an end profile 301 that corresponds to the end profile 301 of the other workpiece 300 to be joined. Similarly, if two workpieces 300 are to be joined, a second workpiece 300 is directed onto a second weld fixture 100 or weld fixtures 100. The first seal member 103 engages a surface of workpiece 300. FIG. 4 shows a view of a welding apparatus including a plurality of weld fixtures 100 for each workpiece 300 for joining the two workpieces 300. As shown in FIG. 4, two workpieces 300 are engaged by corresponding sets of weld fixtures 100. A heating device 400 is provided and is actuatable to a position between sets of weld fixtures 100 and workpieces 300 (see, for example, FIG. 5). The heating device 400 may be any suitable heating device, such as a heated plate. The heat may be provided by any suitable method, including, but not limited to resistance or inductive heating. While FIG. 4 shows two workpieces 300 with corresponding weld fixtures 100, the present disclosure is not so limited. For example, multiple levels of sets of weld fixtures 100 may be utilized. For example, two sets of workpieces 300, three sets of workpieces 300, four sets of workpieces 300 or greater than four sets of workpieces 300 may be joined simultaneously. In one embodiment, the sets of workpieces 300 are joined by corresponding sets of weld fixtures 100 stacked together. The number of weld fixtures 100 that may be stacked is not particularly limited and may include any number that can be manipulated and heated to be joined. FIG. 5 shows the welding apparatus of FIG. 4 wherein the workpieces 300 are heated with the heating device 400 to at least partially melt the edge profile 301 of the workpieces 300. After the edge profiles 301 of the workpieces 300 is melted, the heating device 400 is removed, as shown in FIG. 6, the workpieces 300 are brought together at the edge profile 301 to form a joined product 700. The engagement of a first seal member 103 of one weld fixture 100 and a second seal member 103 of another weld fixture form an edge seal 109 for directing material away from the edge seal 109 when the first seal member 103 and the second seal member 103 are engaged. The directing away from the edge seal 109 forms a finished seam surface. As is visible in FIG. 6, excess material from the melted polymer containing material squeezes out of the joined area and form spew 601. Spew as utilized herein means excess melted material that gets squeezed out at the joint interface between workpieces 300, which forms a bead or flash of jointed material. FIG. 7 shows the joined product 700 and includes spew 601 formed in the area of the joint or seam 701 where no seal member 103 was present. In one embodiment, the material directed away is directed to a surface distal the finished seam surface 703. The areas where the seal member 103 was present, the seam 701 includes a finished seam surface 703. The finished seam surface 703 includes a surface that has an as-formed appearance suitable for final use. In one embodiment, the finished seam surface 703 does not require additional processing, such as cutting or other machining, to provide the finished surface. In one embodiment, the joined product 700 does not require a seam material removal step. In other embodiments, the joined product 700 may be any suitable square component, where the polymer containing material, such as PVC, requires a joint having at least one surface that is aesthetically pleasing. While not so limited, the joined product 700 may be a window component, such as a frame or sash or a door component, such as a frame or trim. In one embodiment, the seam 701 includes a joint strength greater than a joint strength of a joint having material removed from the seam 701.

The mechanical seal member 103 described feature active compression by some mechanical means so that there is a fully defined surface contacting the profile during heating and clamping. By having no area for the spew 601 to move upward, it must flow downward into the profile. The fused joint can be fine-tuned by modifying the end of the seal member 103 to that a more defined feature can be created. For example, this feature may include an undercut or draft. The seal members 103 are able to encase the entire outer surface of the profile - essentially a C-shaped clamping along the weld line all the surfaces contacting the C would result in a joint that is seamless. The interior surfaces of the welded square still have 'normal' weld spew 601. While it is possible to fully incase those surfaces as well in the manner described, it is less preferable due to space and complexity constraints. Suitable material for use for the seal member 103 includes aluminum. In other embodiment, the seal member 103 may be fabricated from other materials, such as, but not limited to steel, titanium, composite or other suitable materials to mitigate effects of heat sinking and or sticking as the material melts. The seal member 103 may be composed of multiple parts with inserts that can be changed out to alter the actual weld joint. Actuation of the seal member 103 is preferred to be fully mechanical using cams or springs and taking advantage of existing weld fixture actuation along the X and Y planes in the machine but other versions could exist that utilize powered compression. The sealing of the seal members 103 against either the opposite weld plate or the opposite slide during fusing is particularly suitable. In one embodiment, the weld fixture 100 may include overlapping joints when the seal members 103 meet each other to prevent deflection in the Z plane as the pressure increasing during welding.

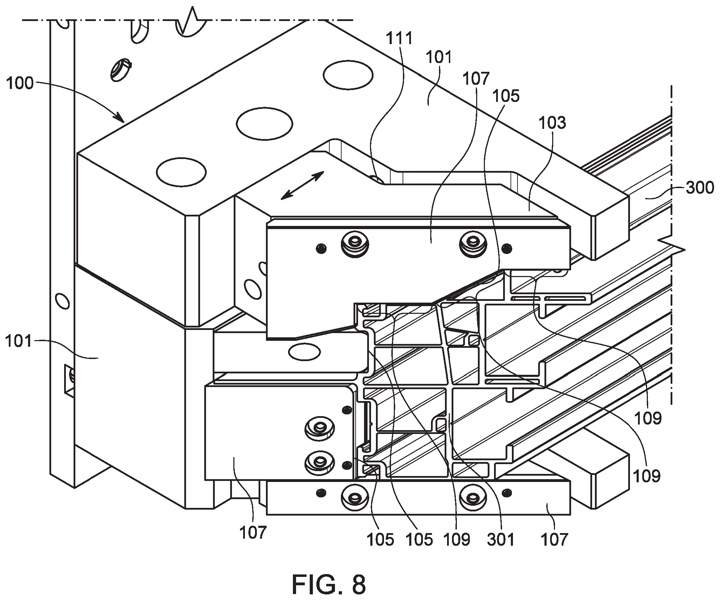

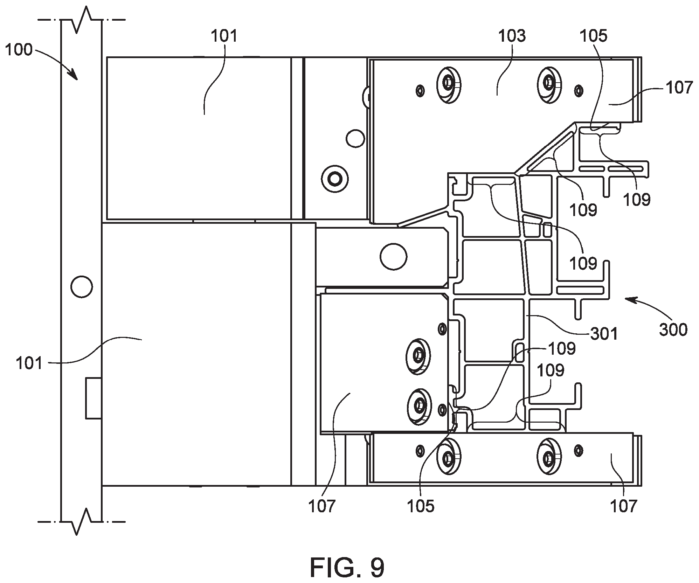

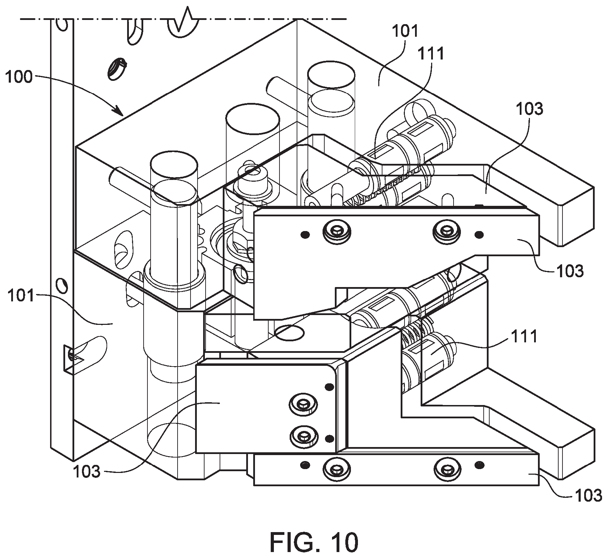

FIG. 8 shows a weld fixture 100 according to another embodiment, where workpiece 300 is in engagement with weld fixture 100. FIG. 9 shows a side view of the weld fixture 100 of FIG. 8. FIG. 10 shows the weld fixture 100 of FIG. 8 illustrating internal components of the weld fixture 100 according to an embodiment of the present disclosure. Like shown above in FIG. 1, weld fixture 100 includes a fixture support member 101 and a moveable seal member 103 mounted on the fixture support member101. In one embodiment, the fixture support member 101 is configured to engage the workpiece 300 to retain and position the workpiece 300. Seal member 103 includes a workpiece 300 contacting surface 105 configured to engage a first workpiece 300 a seal member 103 contacting surface 107 configured to engage a corresponding seal member 103. In one embodiment, the workpiece 300 contacting surface 105 corresponds to at least a portion of an end profile geometry. The engagement of the workpiece 300 contacting surface 105 with workpiece 300 and the engagement of the seal member 103 contacting surface 107 with the corresponding seal member 103 form an edge seal 109 for directing melted polymeric material away from the edge seal 109 during joining to form a finished seam surface 703. The edge seal 109 forms a finished seam surface 703. Although FIGs. 8, 9 and 10 show the edge seal 109 as a corner of the seal member 103, it is understood that the edge seal 109 is formed at the interface when the seal member 103 are engaged. Like in FIG. 1, seal member 103 is moveable with respect to the fixture support member 101. For example, seal member 103 may be slidably mounted on fixture support member 101. In addition, force-providing members 111 are provided to provide a force on the seal member 103.

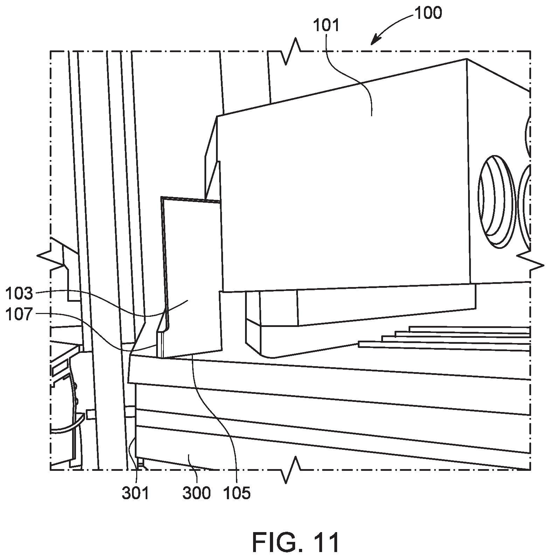

FIG. 11 shows side view of a weld fixture 100 according to another embodiment. This embodiment includes a fixture support member 101, a seal member 103, a workpiece 300 contacting surface 105 and a seal member 103 contacting surface 107, as described above. However, in this embodiment, the fixture support member 101 and the seal member 103 includes a different configuration. As shown in FIG. 11, the fixture support member 101 and the seal member 103 are in engagement with a workpiece 300 to provide movement and positioning of workpiece 300.

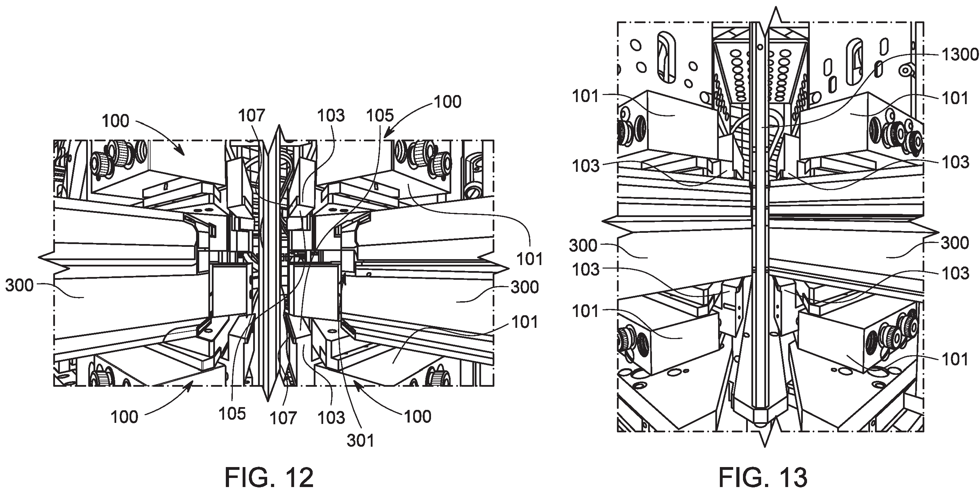

FIGs. 12 and 13 show a welding apparatus according to another embodiment of the present disclosure. As shown in FIG. 12, the welding apparatus includes a first set of weld fixtures 100 holding a first workpiece 300 on the left and a second set of weld fixtures 100 holding a first workpiece 300 on the right. FIG. 12 shows workpieces 300 prior to engagement with the weld fixtures 100 and FIG. 13 shows the workpieces 300 after engagement. In addition, FIG. 13 shows workpieces 300 being aligned within weld fixtures 100 using an alignment plate 1300 as an initial step in the joining process.

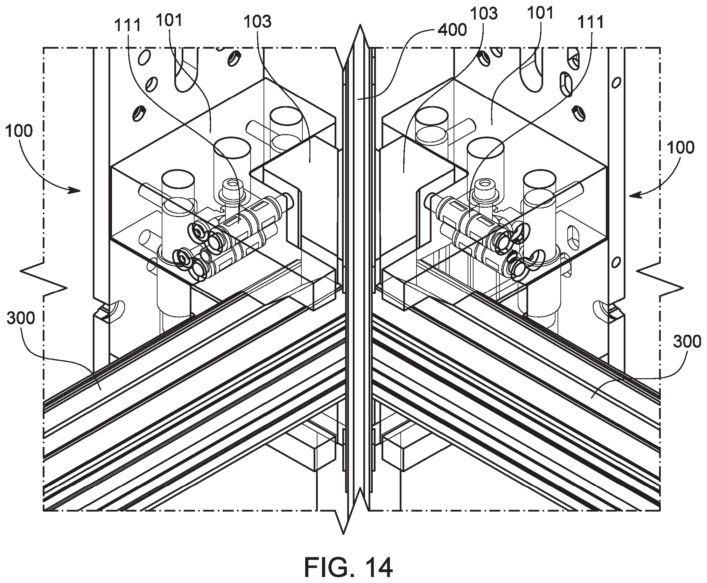

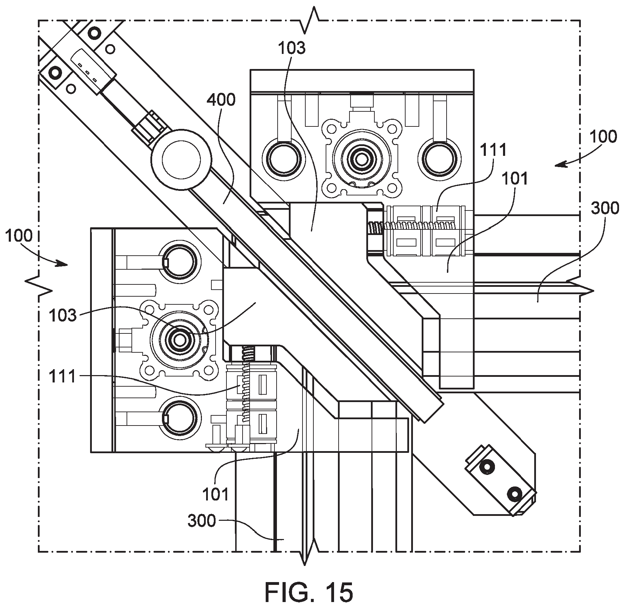

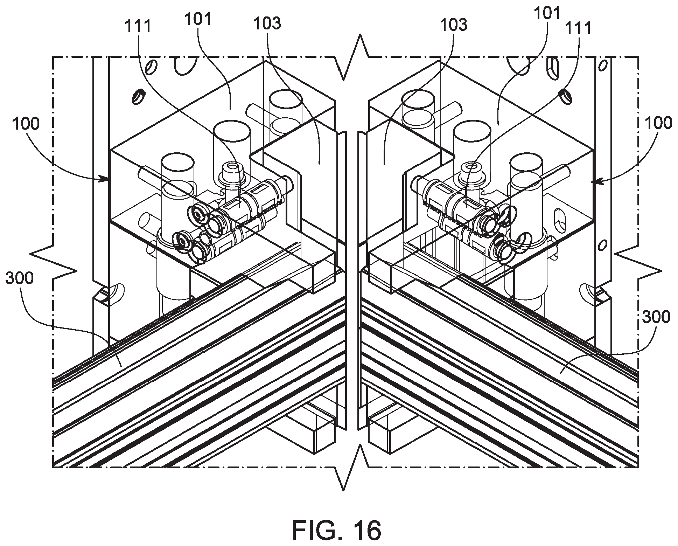

FIGs. 14 and 15 shows a welding apparatus according to an alternate embodiment where the workpieces 300 are heated with a heating device 400. As is best visible in FIG. 15, during the heating step, weld seals 103 rest against heating device 400. As described above with respect to FIG. 5 the workpieces 300 are heated with the heating device 400 to at least partially melt the edge profile 301 of the workpieces 300. After the edge profiles 301 of the workpieces 300 are melted, the heating device 400 is removed, as shown in FIG. 16.

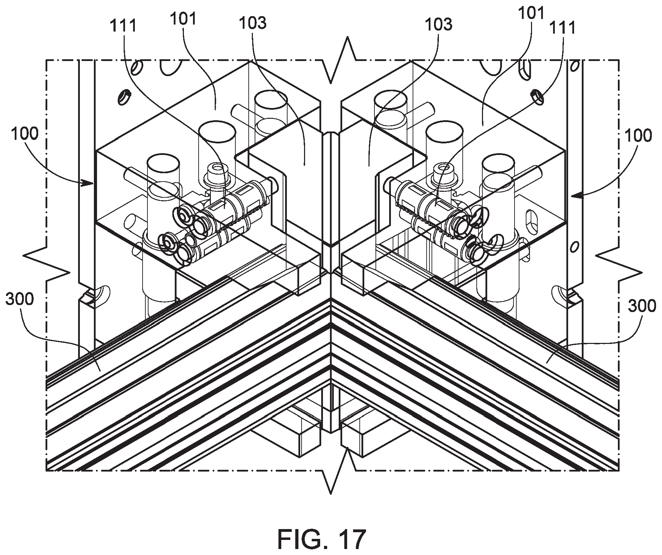

As shown in FIG. 17, The workpieces 300 are brought together at the edge profile 301 to form a joined product 700. The engagement of a first seal member 103 of one weld fixture 100 and a second seal member 103 of another weld fixture 100 form an edge seal 109 for directing material away from the edge seal 109 when the first seal member 103 and the second seal member 103 are engaged. The directing away from the edge seal 109 forms a finished seam surface 703 (see for example, FIG. 20).

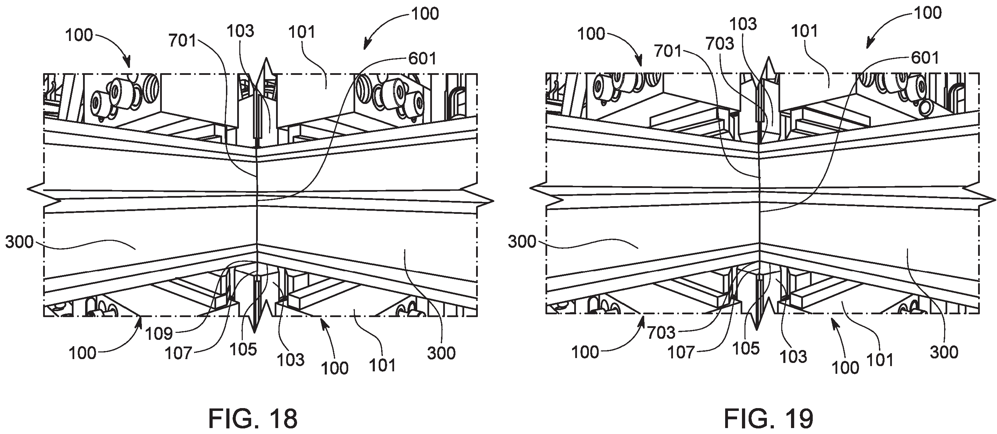

FIG. 18 shows a welding apparatus according to another embodiment of the present disclosure, wherein the heated workpieces 300 have been directed into contact to form the joined product 700 and FIG. 19 shows the apparatus wherein the joined product 700 has been released from the weld fixtures 100. As shown in FIGs. 18 and 19, when the heated workpieces 300 are brought together, excess material from the melted polymer containing material squeezes out of the joined area and form spew 601, while surfaces engaged with the seal member 103 form a finished seam surface 703 (see for example, FIG. 20).

The joined product 700, as shown in FIG. 20, shows that in areas where the seal member 103 was present and engaged with the workpiece 300, seam 701 includes a finished seam surface 703. The finished seam surface 703 includes a surface that has an as-formed appearance suitable for final use. In one embodiment, the finished seam surface 703 does not require additional processing, such as cutting or other machining, to provide the finished surface.

Embodiments of the present disclosure include a method for forming a seamless or near seamless weld. The method may include the following steps:
- The workpieces 300 are inserted into the welding apparatus.
- The welding apparatus shifts to push each part into a squaring plate.
- The weld fixtures 100 clamps down on the part.
- A heating device 400 is moved into the position previously occupied by the alignment plate 1300.
- The weld fixtures 100 move towards the heating device 400, pressing the end profile 301 against the heating device 400. Before the end profile 301 makes contact with the heating device 400, the weld seals 103 contact the heating device 400, creating an edge seal 109 and an enclosed edge.
- The workpiece 300 contacts the heating device 400 and beings to melt, spew 601 flows down or inward due to the outer surfaces being fully contained by the weld seals 103.
- The weld fixtures 100 pull the heated edge profile 301 away from the heating device 400. As that happens, the weld seals 103 extend ensuring the top edge of the edge profile 301 is not exposed.
- The programming of the steps of heating and welding are specific to each edge profile 301 being welded and may require more or less steps. For example, the process may include multiple heating steps, multiple compression steps, slight back and forth movements to seat the weld or direct the spew 601.
- The heating device 400 is removed and the weld fixtures 100 move inward compressing the two heated edge profiles 301 into each other. Before the melted surfaces contact, the weld seals 103 contact each other ensuring that as the edge profiles 301 contact and there is no gap above them for weld spew 601 to enter.

In one embodiment, one or more weld fixture 100 are mounted on a window component welding apparatus. In another embodiment, one or more weld fixtures 100 are retrofitted into a window component welding apparatus. The weld fixtures 100 may be removeable and/or interchangeable. For example, multiple weld fixtures 100 may be provided to fit certain products and/or geometries without requiring reconfiguration of the entire welding apparatus.

In one embodiment, the weld fixtures 100 prevents the weld spew 601 from moving upward (towards the outers surfaces) during the melting and joining steps of the weld process. In the method and apparatus of the present disclosure, the weld seal 103 engage each other and fully cover the top surfaces of the profile of the joined workpieces 300 during heating and fusing and have features that allow for precision shaping of the exact reveal line at the weld joint, enabling customization based on aesthetic considerations. In certain embodiments, the weld seals 103 are able to have specific end shaping which allows for the molding of the fused weld joint. These weld seals 103 are integrated into the weld fixtures 100 in a manner that allows them to be used on a standard welding machine and can be used in multi stack configuration or quick changed out to put in standard fixtures to the machine can operate with a normal welding cycle. The utilization of the weld fixtures 100 according to the present disclosure prevents that visible spew 601 from forming with the weld seals 103 directing spew 601 inward leaving a seamless or near seamless joint. Another embodiment of the present disclosure includes a servo-controlled welder machine that provides precise actuation of the welding heads to points in space, versus physical stops.

While the exemplary embodiments illustrated in the figures and described herein are presently preferred, it should be understood that these embodiments are offered by way of example only. Accordingly, the present application is not limited to a particular embodiment, but extends to various modifications that nevertheless fall within the scope of the appended claims. The order or sequence of any processes or method steps may be varied or re- sequenced according to alternative embodiments.

It is important to note that the construction and arrangement of the various exemplary embodiments is illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited in the claims. For example, elements shown as integrally formed may be constructed of multiple parts or elements, the position of elements may be reversed or otherwise varied, and the nature or number of discrete elements or positions may be altered or varied. Accordingly, all such modifications are intended to be included within the scope of the present application. The order or sequence of any process or method steps may be varied or re-sequenced according to alternative embodiments. In the claims, any means-plus-function clause is intended to cover the structures described herein as performing the recited function and not only structural equivalents but also equivalent structures. Other substitutions, modifications, changes and omissions may be made in the design, operating conditions and arrangement of the exemplary embodiments without departing from the scope of the present application.

## Claims

1. A weld fixture for joining polymer containing workpieces comprising:
a fixture support member; and
a moveable seal member mounted on the fixture support member, the seal member having a workpiece contacting surface configured to engage a workpiece and a seal member contacting surface configured to engage a corresponding seal member;
wherein the engagement of the workpiece contacting surface with the workpiece and the engagement of the seal member contacting surface with the corresponding seal member form an edge seal for directing melted polymeric material away from the edge seal during joining to form a finished seam surface.

2. The weld fixture of claim 1, wherein the workpiece includes polyvinyl chloride (PVC) or composite.

3. The weld fixture of claim 1, wherein the workpiece is a portion of a window component.

4. The weld fixture of claim 1, wherein the workpiece contacting surface corresponds to at least a portion of an end profile geometry.

5. The weld fixture of claim 1, wherein the weld fixture is mounted on a window component welding apparatus.

6. The weld fixture of claim 1, wherein the weld fixture is retrofitted into a window component welding apparatus.

7. The weld fixture of claim 1, wherein the seal member is arranged and disposed to move with respect to the fixture support member.

8. The weld fixture of claim 1, wherein a force-providing member provides a force urging the seal member toward the corresponding seal member.

9. The weld fixture of claim 8, wherein the force-providing member is one or more springs.

10. The weld fixture of claim 8, wherein the fixture support member is configured to engage the workpiece to retain and position the workpiece.

11. A welding apparatus for joining polymer containing workpieces comprising:
a first weld fixture and a second weld fixture, the first weld fixture and the second weld fixture each including the weld fixture according to claim 1, the first weld fixture being configured to receive a first workpiece and the second weld fixture being configured to receive a second workpiece; and
a heating device for heating an end profile of each of the first workpiece and the second workpiece, the heating device being moveable to a position to heat the end profile of each of the first workpiece and the second workpiece;
wherein the edge seal is formed by the engagement of the seal member of the first weld fixture with the seal member of the second weld fixture.

12. A method for forming a seamless or near seamless weld on joined polymer containing workpieces, the method comprising:
positioning a first workpiece having a first end profile on a first weld fixture having a first seal member, the first workpiece being engaged with a workpiece contacting surface of the first seal member;
positioning a second workpiece having a second end profile on a second weld fixture having a second seal member, the second end profile corresponding to the first end profile, and the second workpiece being engaged with a workpiece contacting surface of the second seal member;
heating the first and second end profiles to at least partially melt the material of the first and second end profiles; and
directing the first and second workpieces and the first and second weld fixtures together to form an edge seal and join the first workpiece to the second workpiece at the first end profile and the second end profile;
wherein the engagement of the first seal member and the second seal member form an edge seal for directing material away from the edge seal when the first seal member and the second seal member are engaged to form a finished seam surface.

13. The method of claim 12, wherein the heating device is a heating plate actuatable to a position

14. The method of claim 12, wherein the method is devoid of seam material removal steps.

15. The method of claim 12, wherein the workpiece includes polyvinyl chloride (PVC) or composite.

16. The method of claim 12, wherein the material directed away is directed to a surface distal the finished seam surface.

17. The method of claim 12, wherein the workpiece is a portion of a window component.

18. A joined product comprising:
a first workpiece joined to the second workpiece according to the process of claim 12;
a seam having the finished seam surface and a seam surface a distal surface of the product including polymeric spew directed from the edge seal.
Wherein the product is a window component.

19. The joined product of claim 18, wherein the finished seam surface is formed without removal of material.

20. The joined product of claim 18, wherein the seam includes a joint strength greater than a joint strength of a joint having material removed from the seam.
